# EUROPÄISCHE PATENTSCHRIFT

(11) **EP 3 456 197 B1**
(45) Veröffentlichungstag und Bekanntmachung des Hinweises auf die Patenterteilung: **21.02.2024**
(21) Anmeldenummer: 18193744.2
(22) Anmeldetag: 11.09.2018
(51) Int. Cl.: A01M 21/02, E04F 21/165

(54) **UNKRAUT-FUGENFRÄSE**
WEED GROOVING MACHINE
FRAISES POUR JOINTS DE CARRELAGE À DÉSHERBER

(30) Priorität: 13.09.2017 DE 102017121154
(43) Veröffentlichungstag der Anmeldung: 20.03.2019
(73) Patentinhaber: Alfred Kärcher SE & Co. KG, 71364 Winnenden (DE)
(72) Erfinder: Werlein, Kerstin, 71364 Winnenden (DE); Rehner, Michael, 73453 Untergröningen (DE); Haug, Oliver, 73728 Esslingen (DE)
(74) Vertreter: Hoeger, Stellrecht & Partner Patentanwälte mbB

(56) Entgegenhaltungen:
- DE-U1- 9 000 712
- DE-U1- 9 002 367
- DE-U1- 29 611 986
- DE-U1- 29 822 658
- US-A- 4 817 235
- US-A1- 2008 229 530

## Beschreibung

Die Erfindung betrifft eine Unkraut-Fugenfräse, umfassend eine Bürstenscheibe, welche um eine Drehachse drehbar gelagert ist, eine Motoreinheit mit einem Antriebsmotor für die Bürstenscheibe und mit einer ersten Mittelebene, welche mittig zwischen lateralen Begrenzungswänden der Motoreinheit bezogen auf die Richtung der Drehachse liegt und senkrecht zu der Drehachse orientiert ist, wobei die Bürstenscheibe einseitig an einem Schenkel gelagert ist, eine Haltestabeinrichtung, an welcher die Motoreinheit angeordnet ist und welche eine zweite Mittelebene senkrecht zu der Drehachse hat, wobei die zweite Mittelebene mittig zwischen lateralen Abmessungen der Haltestabeinrichtung in Richtung der Drehachse liegt, und eine Griffeinheit, welche an der Haltestabeinrichtung an einem proximalen Ende der Unkraut-Fugenfräse angeordnet ist und welche eine dritte Mittelebene senkrecht zu der Drehachse hat, wobei die dritte Mittelebene mittig zwischen lateralen Abmessungen der Griffeinheit bezogen auf die Richtung der Drehachse liegt.

Die DE 298 22 658 U1 offenbart eine Vorrichtung zum Reinigen von Fugen mit einem an einer Halte- und Führungseinrichtung angeordneten Reinigungswerkzeug. An der Halte- und Führungseinrichtung ist ein Stützrad gelagert.

Die US 2008/0229530 A1 offenbart ein Reinigungsgerät, welches ausgerichtete Räder hat, die innerhalb eines Gehäuses angeordnet sind und dabei an einem Endbereich eines Stabs angeordnet sind.

Die DE 10 2012 005 173 A1 offenbart eine Hand-Trennmaschine.

Die US 6,293,349 B1 offenbart einen Fräser mit einem Drahtrad.

Die DE 10 2014 010 692 A1 offenbart ein handgeführtes Reinigungs- und Pflegegerät für Fliesenbodenbeläge oder Holzbodenbeläge.

Aus der WO 2004/051001 A1 ist ein Rotationsgerät zur Entfernung von Unkraut bekannt.

In der CN 205 337 340 U ist ein tragbares Unkrautentfernungsgerät beschrieben.

Aus der DE 196 27 715 A1 ist ein elektrischer Fugenreiniger bekannt.

In der WO 00/66858 A1 ist eine Maschine zur Entfernung von Fugenzement beschrieben.

Die DE 90 00 712.3 U1 offenbart eine Unkrautfräse. Der Abstand der Bürstenscheibe zu der Mittelebene ist nicht eindeutig benannt. Der Motor liegt am proximalen Ende.

Die DE 296 11 986 U1 offenbart einen elektrischen Fugenreiniger.

Der Erfindung liegt die Aufgabe zugrunde, eine Unkraut-Fugenfräse der eingangs genannten Art bereitzustellen, welche auf einfache Weise bedienbar ist.

Diese Aufgabe wird bei der eingangs genannten Unkraut-Fugenfräse erfindungsgemäß dadurch gelöst, dass die Bürstenscheibe an der ersten Mittelebene liegt, wobei eine Mittelebene der Bürstenscheibe und die erste Mittelebene zusammenfallen, oder höchstens einen Abstand einer zweifachen Dicke der Bürstenscheibe in einer Richtung parallel zu der Drehachse zu der ersten Mittelebene hat, und dass an einem distalen Ende der Unkraut-Fugenfräse die Motoreinheit liegt.

Durch die erste Mittelebene bzw. zweite Mittelebene bzw. dritte Mittelebene ist eine natürliche Ebene zur Ausrichtung der Unkraut-Fugenfräse vorgegeben. Durch eine mindestens näherungsweise Positionierung der mindestens einen Bürstenscheibe an der ersten Mittelebene ergibt sich eine intuitive Bedienbarkeit für einen Bediener; dieser muss für eine Fugenreinigung die entsprechende Bürstenscheibe in eine Fuge bringen und dann auch längs der Fuge fahren. Durch die mindestens näherungsweise Ausrichtung zu der entsprechenden Mittelebene wird dies für einen Bediener erleichtert und erfolgt insbesondere auf intuitive Weise.

Es ergibt sich so eine einfache Bedienbarkeit.

Ferner ergibt sich ein ermüdungsarmes Arbeiten für den Bediener, da sich Kippmomente und dergleichen minimieren lassen.

Ferner lässt sich die Unkraut-Fugenfräse mit relativ geringen lateralen Abmessungen der Motoreinheit ausbilden. Es ergibt sich dann eine hohe Randgängigkeit für eine Fugenreinigung. Ferner lässt sich die Unkraut-Fugenfräse platzsparend lagern.

Bei einer vorteilhaften Ausführungsform liegt mindestens eines der Folgenden vor: Die erste Mittelebene und die zweite Mittelebene fallen zusammen; die zweite Mittelebene und die dritte Mittelebene fallen zusammen; die erste Mittelebene und die dritte Mittelebene fallen zusammen. Insbesondere fallen die erste Mittelebene, die zweite Mittelebene und die dritte Mittelebene zusammen. Es ergibt sich so eine einfache intuitive Bedienbarkeit bezüglich Eintauchen der Bürstenscheibe in eine Fuge und Entlangfahren an einer Fuge.

Es ist aus den gleichen Gründen günstig, wenn eine Mittelebene der Bürstenscheibe (eine Ebene, welche mittig bezogen auf eine Richtung längs der Drehachse für die Bürstenscheibe ist) und die erste Mittelebene und/oder die zweite Mittelebene und/oder die dritte Mittelebene zusammenfallen. Es lässt sich so ein symmetrisierter Aufbau der Unkraut-Fugenfräse erreichen mit intuitiver Bedienbarkeit bezüglich Eintauchen in eine Fuge und Entlangfahren einer Fuge.

Günstig ist es, wenn eine Schutzhaube vorgesehen ist, welche der Bürstenscheibe zugeordnet ist, und welche bei ordnungsgemäßer Bedienung in Draufsicht für einen Bediener die Bürstenscheibe abdeckt. Dadurch wird ein Bediener vor herausspritzendem Material aus einer Fuge geschützt. Durch die erfindungsgemäße Lösung bezüglich Positionierung und Ausrichtung der Bürstenscheibe ergibt sich für einen Bediener auch bei Nichtsichtbarkeit der Bürstenscheibe eine intuitive Bedienbarkeit für das Eintauchen in eine Fuge und Entlangfahren.

Es ist dann besonders vorteilhaft, wenn mindestens eine Markierung vorgesehen ist, welche für einen Bediener eine Position der Bürstenscheibe an der Unkraut-Fugenfräse anzeigt und insbesondere eine Scheibenebene anzeigt, an oder in welcher die Bürstenscheibe liegt. Ein Bediener kann dann auf einfache Weise die Unkraut-Fugenfräse so ausrichten, dass eine Bürstenscheibe in eine Fuge eintauchbar ist, bzw. kann auf einfache Weise eine Ausrichtung durchführen, welche ein Entlangfahren an einer Fuge ermöglicht.

Die mindestens eine Markierung kann dabei beispielsweise an oder mittels einer Schutzhaube für das Bürstenwerkzeug und/oder an einer Gehäuseeinrichtung der Motoreinheit und/oder der Haltestabeinrichtung angeordnet oder gebildet sein, um eine einfache Bedienbarkeit zu ermöglichen. Beispielsweise kann die Schutzhaube durchsichtig ausgebildet sein und die Bürstenscheibe ist dann durch die Schutzhaube sichtbar. Dies bildet eine Markierung (für die Position der Bürstenscheibe) mittels der Schutzhaube.

Günstig ist es, wenn die Motoreinheit eine Gehäuseeinrichtung aufweist, in welcher der Antriebsmotor angeordnet ist, wobei insbesondere ein Antriebsmotor ein Elektromotor ist. Es ergibt sich dadurch ein kompakter Aufbau, wobei sich der Antriebsmotor und insbesondere auch eine Drehmomentübertragungseinrichtung effektiv schützen lassen.

Günstig ist es, wenn die Gehäuseeinrichtung in Draufsicht mindestens in einem Teilbereich eine L-Form mit einem ersten Schenkel, einem zweiten Schenkel und einem Freiraum zwischen dem ersten Schenkel und dem zweiten Schenkel hat, wobei der zweite Schenkel quer zu dem ersten Schenkel angeordnet ist, und wobei die Bürstenscheibe und/oder eine Schutzhaube für die Bürstenscheibe in dem Freiraum positioniert sind. Es lässt sich so auf einfache Weise erreichen, dass die Bürstenscheibe mindestens näherungsweise zu der ersten Mittelebene ausgerichtet ist. Ferner ergibt sich mindestens einseitig eine hohe Randgängigkeit für Fugenreinigungsvorgänge.

Es ist dann günstig, wenn der Antriebsmotor mindestens in einem Teilbereich (beispielsweise bezogen auf eine Welle des Antriebsmotors) an dem ersten Schenkel angeordnet ist. Es ergibt sich so ein kompakter Aufbau.

Es ist ferner günstig, wenn eine Drehmomentübertragungsstrecke zur Übertragung eines Drehmoments von dem Antriebsmotor an die mindestens eine Bürstenscheibe mindestens teilweise an dem zweiten Schenkel angeordnet ist. Dadurch ergibt sich eine effektive Platznutzung und die Unkraut-Fugenfräse lässt sich gewichtssparend ausbilden. Ferner lässt sie sich mit hoher Randgängigkeit ausbilden.

Günstig ist es, wenn der Antriebsmotor eine Welle mit einer Rotationsachse aufweist, welche quer und insbesondere senkrecht zu der Drehachse der Bürstenscheibe orientiert ist. Dadurch lässt sich die Unkraut-Fugenfräse mit geringen lateralen Abmessungen ausbilden. Sie lässt sich kompakt ausbilden. Es lässt sich für einen Bediener auf einfache Weise ein Eintauchen und Entlangführen an Fugen erreichen. Es lässt sich auf einfache Weise eine mindestens näherungsweise fluchtende Ausrichtung zwischen der Bürstenscheibe und beispielsweise der ersten Mittelebene erreichen.

Es ist insbesondere günstig, wenn die Rotationsachse des Antriebsmotors auf der ersten Mittelebene liegt oder ein Abstand von höchstens einer zweifachen Dicke der Bürstenscheibe zu der ersten Mittelebene aufweist. Dadurch ergibt sich ein kompakter Aufbau mit geringen lateralen Abmessungen. Dadurch wiederum lässt sich beispielsweise eine hohe Randgängigkeit und eine einfache Bedienbarkeit mit einfacher Ausrichtbarkeit erreichen.

Günstig ist es, wenn die Motoreinheit eine Drehmomentübertragungseinrichtung zur Übertragung eines Drehmoments von dem Antriebsmotor zu der Bürstenscheibe aufweist. Es lässt sich so eine optimierte Positionierung des Antriebsmotors erreichen. Die Drehmomentübertragungseinrichtung sorgt dann für die drehmomentwirksame Ankopplung. Dadurch wiederum lässt sich eine hohe Randgängigkeit erreichen. Es lässt sich die Motoreinheit mit geringen lateralen Abmessungen ausbilden.

Es ist dann günstig, wenn die Drehmomentübertragungseinrichtung mindestens eines der Folgenden umfasst: einen Drehzahluntersetzer; ein Winkelgetriebe zur Richtungsumlenkung eines Drehmoments; eine Drehmomentübertragungsstrecke zur Überbrückung eines räumlichen Abstands. Durch den Drehzahluntersetzer lassen sich einfache bzw. kostengünstige Antriebsmotoren verwenden. Es lässt sich auf einfache Weise eine für einen effektiven Säuberungsvorgang benötigte Drehzahl für die Bürstenscheibe erreichen. Über das Winkelgetriebe lässt sich beispielsweise der relativ schwere Antriebsmotor optimiert für einen Schwerpunkt der Motoreinheit positionieren. Es lässt sich über eine Richtungsumlenkung eines Drehmoments beispielsweise eine einseitige Lagerung der Bürstenscheibe erreichen. Dies wiederum ermöglicht eine hohe Randgängigkeit. Die Drehmomentübertragungsstrecke ermöglicht es beispielsweise, die Motoreinheit mit geringen lateralen Randabmessungen in eine Richtung parallel zu der Drehachse auszubilden.

Bei einem konstruktiv einfachen Ausführungsbeispiel umfasst die Übertragungsstrecke einen Riemenantrieb. Es sind auch andere Getriebearten, wie beispielsweise Zahnradgetriebe oder dergleichen, möglich.

Günstig ist es, wenn ein Schwerpunkt der Motoreinheit auf der ersten Mittelebene liegt oder ein Abstand von höchstens einer zweifachen Dicke der mindestens einen Bürstenscheibe zu der ersten Mittelebene hat. Der Schwerpunkt der Motoreinheit liegt dann mindestens näherungsweise auf der ersten Mittelebene. Dadurch ergibt sich eine einfache Bedienbarkeit für einen Bediener.

Die Bürstenscheibe ist einseitig an einem Schenkel und insbesondere einem Schenkel der Motoreinheit gelagert. Dadurch ergibt sich ein einfacher Aufbau. Ferner ergibt sich eine hohe Randgängigkeit. Weiterhin lässt sich die Motoreinheit mit geringen lateralen Abmessungen parallel zu der Drehachse der Bürstenscheibe ausrichten.

Es kann vorgesehen sein, dass der Schenkel, an welchem die Bürstenscheibe einseitig gelagert ist, mindestens mit einem Teilbereich beabstandet zu der ersten Mittelebene ist. Dadurch ergibt sich auf einfache Weise eine vorteilhafte Ausrichtung der Bürstenscheibe, welche dann mindestens näherungsweise an der ersten Mittelebene liegt.

Aus dem gleichen Grund ist es günstig, wenn an dem Schenkel eine Schutzhaube für die Bürstenscheibe angeordnet ist und insbesondere schwenkbar oder drehbar gelagert ist. Die Schutzhaube lässt sich auf optimierte Weise positionieren, so dass beispielsweise ein Schwerpunkte der Motoreinheit mindestens näherungsweise an der ersten Mittelebene liegt und Kippmomente oder dergleichen minimiert sind.

Es ist ebenfalls günstig, wenn ein Lager, an welchem die mindestens eine Bürstenscheibe gelagert ist, beabstandet zu der ersten Mittelebene ist. Dadurch lässt sich auf einfache Weise die Bürstenscheibe insbesondere bezüglich ihrer Mittelebene an der ersten Mittelebene der Motoreinheit positionieren.

Vorteilhafterweise ist der Bürstenscheibe als Bearbeitungswerkzeug der Unkraut-Fugenfräse eine schwenkbare oder drehbare Schutzhaube zugeordnet, wobei eine Schwenkachse insbesondere mindestens näherungsweise parallel oder koaxial zu der Drehachse der entsprechenden Bürstenscheibe ist. Im operativen Betrieb der Unkraut-Fugenfräse schützt die Bürstenscheibe einen Bediener vor spritzendem Material. Die Schutzhaube kann auch zur Lagerung der Unkraut-Fugenfräse verwendet werden, um Bürsten der mindestens einen Bürstenscheibe abzudecken und dadurch ihre Zerstörung aufgrund von Kräften, welche durch längere Lagerung wirken, zu verhindern.

Insbesondere weist dann die Schutzhaube eine Schwenkstellung auf, in welcher sie die zugeordnete Bürstenscheibe abdeckt und in welcher die Unkraut-Fugenfräse über die Schutzhaube auf einer Unterlage abstützbar ist, wobei diese Schwenkstellung von einer operativen Schwenkstellung der Schutzhaube verschieden ist. In der entsprechenden Abdeckungsstellung können Borsten der Bürstenscheibe geschützt werden. Diese erfahren keine Abstützungskräfte.

Bei einer Ausführungsform ist eine Stützeinrichtung zur Abstützung der Unkraut-Fugenfräse beabstandet zu der Bürstenscheibe an einem Untergrund vorgesehen. Dadurch ergibt sich für einen Bediener ein einfaches Arbeiten, da er geringere Kräfte aufwenden muss. Die Stützeinrichtung kann auch zum Abstellen beziehungsweise Lagern der Unkraut-Fugenfräse verwendet werden.

Insbesondere ist die Stützeinrichtung an der Motoreinheit gehalten. Dadurch ergibt sich ein geringer konstruktiver Aufwand zur Ausbildung der Stützeinrichtung.

Die Stützeinrichtung kann dabei ein oder mehrere Stützelemente und insbesondere Rollen aufweisen, welche beispielsweise symmetrisch zu der ersten Mittelachse angeordnet sind. Dadurch ergibt sich eine einfache Bedienbarkeit für einen Bediener. Die Stützeinrichtung verursacht keine Schwerpunktverschiebung oder dergleichen. Es lässt sich auf einfache Weise eine Ausrichtung erreichen.

Es kann dabei vorgesehen sein, dass die Stützeinrichtung beweglich und insbesondere schwenkbar mit einer Schwenkachse mindestens näherungsweise parallel zu der Drehachse der mindestens einen Bürstenscheibe ist. Beispielsweise erfolgt eine federgelagerte Abstützung über ein Schwenklager. Dadurch ist auf einfache Weise eine Anpassung beispielsweise an unterschiedliche Bedienergrößen möglich.

Günstig ist es, wenn eine Länge der Haltestabeinrichtung zwischen der Motoreinheit und der Griffeinheit mindestens 30 cm und vorzugsweise mindestens 50 cm beträgt. Es ist insbesondere vorgesehen, dass ein stehender Bediener, welcher auf der zu bearbeitenden Unterlage aufsteht, einen Bearbeitungsvorgang durchführen kann, d. h. mit der mindestens einen Bürstenscheibe Fugen bearbeiten und von Unkraut befreien kann.

Es kann eine Einstellbarkeit einer Länge der Unkraut-Fugenfräse zwischen einem distalen Enden und einem proximalen Ende vorgesehen sein. Insbesondere ist eine Länge der Haltestabeinrichtung einstellbar. Dadurch kann eine optimierte Anpassung an einen Bediener erfolgen.

Bei einem Ausführungsbeispiel ist es vorgesehen, dass an der Griffeinheit ein Betätigungsschalter angeordnet ist. Über den Betätigungsschalter lässt sich der Antriebsmotor aktivieren. Es ergibt sich dadurch eine einfache Bedienbarkeit.

Es ergibt sich ein einfacher konstruktiver Aufbau, wenn an der Griffeinheit ein Netzanschluss (für ein Netzanschlusskabel) und/oder eine Batterieeinrichtung angeordnet ist.

Günstig ist es, wenn die Griffeinheit einen Griffbereich für einen Hand-Aufgriff (Speichgriff) umfasst. Dadurch kann die Unkraut-Fugenfräse auf einfache Weise gehalten werden.

Es ist dann ferner günstig, wenn ein weiteres Griffelement vorgesehen ist, wobei die Unkraut-Fugenfräse über eine Hand an der Griffeinheit und über die andere Hand an dem weiteren Griffelement gehalten werden kann. Es ergibt sich so eine einfache Bedienbarkeit.

Insbesondere ist dann das weitere Griffelement mit einem Griffbereich für einen Hand-Oberbegriff (Ristgriff) oder einem Hand-Untergriff (Kammgriff) versehen. Es ergibt sich dann eine einfache Bedienbarkeit.

Bei einer konstruktiv einfachen Ausführungsform ist ein Griffbereich des weiteren Griffelements beabstandet zu der Haltestabeinrichtung und insbesondere an der Haltestabeinrichtung gehalten. Es ergibt sich so ein einfacher konstruktiver Aufbau mit einfacher Bedienbarkeit.

Die nachfolgende Beschreibung bevorzugter Ausführungsformen dient im Zusammenhang mit den Zeichnungen der näheren Erläuterung der Erfindung. Es zeigen:
- Figur 1: eine isometrische Darstellung eines ersten Ausführungsbeispiels einer erfindungsgemäßen Unkraut-Fugenfräse;
- Figur 2: eine Seitenansicht der Fugenfräse gemäß Figur 1;
- Figur 3: eine Draufsicht in der Richtung A auf die Unkraut-Fugenfräse gemäß Figur 1;
- Figur 4: eine isometrische Ansicht einer Motoreinheit der Unkraut-Fugenfräse gemäß Figur 1 mit einer geöffneten Gehäuseeinrichtung;
- Figur 5: eine Draufsicht auf die Motoreinheit mit geöffneter Gehäuseeinrichtung entsprechend der Richtung B gemäß Figur 4 entsprechend einer Schnittansicht längs der Linie 5-5 gemäß Figur 2;
- Figur 6: eine weitere Seitenansicht der Unkraut-Fugenfräse gemäß Figur 1 mit einer Schutzhaube in einer Stellung zur Lagerung der Unkraut-Fugenfräse;
- Figur 7: eine Schnittansicht längs der Linie 7-7 gemäß Figur 3;
- Figur 8: eine Variante der Unkraut-Fugenfräse gemäß Figur 1 mit einer Stützeinrichtung;
- Figur 9: eine Ansicht der Unkraut-Fugenfräse gemäß Figur 8 in der Richtung C;
- Figur 10: ein zweites Ausführungsbeispiel einer erfindungsgemäßen Unkraut-Fugenfräse in isometrischer Ansicht; und
- Figur 11: eine Seitenansicht der Unkraut-Fugenfräse gemäß Figur 10.

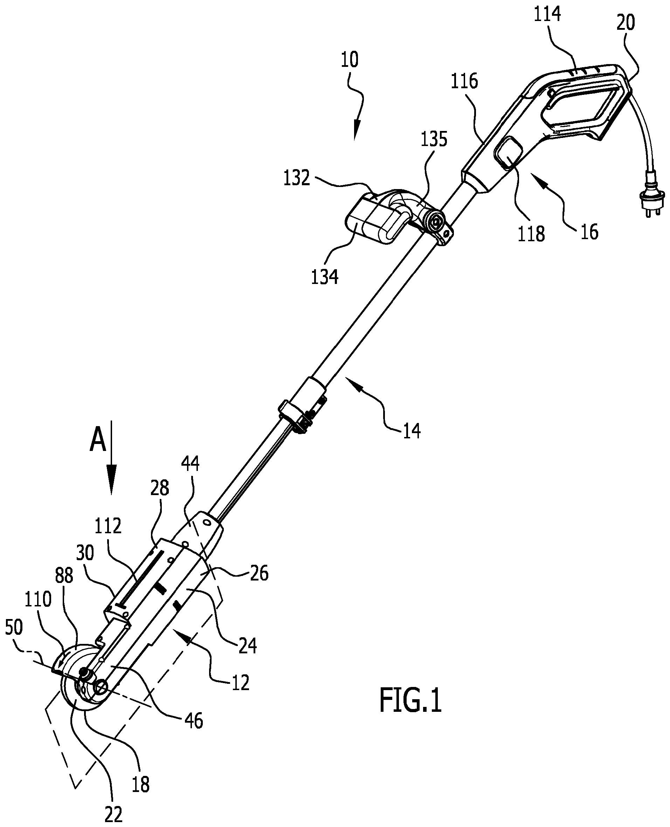

Ein erstes Ausführungsbeispiel einer erfindungsgemäßen Unkraut-Fugenfräse, welche in den Figuren 1 bis 7 gezeigt und mit 10 bezeichnet ist, umfasst eine Motoreinheit 12, eine Haltestabeinrichtung 14, und eine Griffeinheit 16.

Die Unkraut-Fugenfräse 10 hat ein distales Ende 18 und ein gegenüberliegendes proximales Ende 20. Das distale Ende 18 liegt an der Motoreinheit 12. Das proximale Ende 20 liegt an der Griffeinheit 16.

Die Unkraut-Fugenfräse 10 ist so ausgebildet, dass ein Bediener stehend die Unkraut-Fugenfräse 10 an der Griffeinheit 16 halten kann und über eine Bürstenscheibe 22 als Werkzeug Fugen von Unkraut befreien kann.

Die Haltestabeinrichtung 14 ist an der Motoreinheit 12 angeordnet. Die Griffeinheit 16 ist an der Haltestabeinrichtung 14 angeordnet. Über die Haltestabeinrichtung 14 ist die Griffeinheit 16 mit der Motoreinheit 12 verbunden.

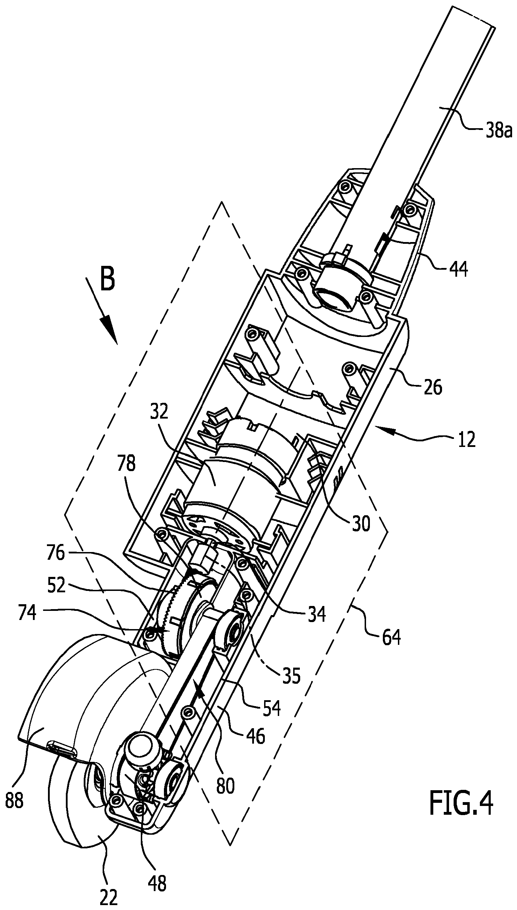

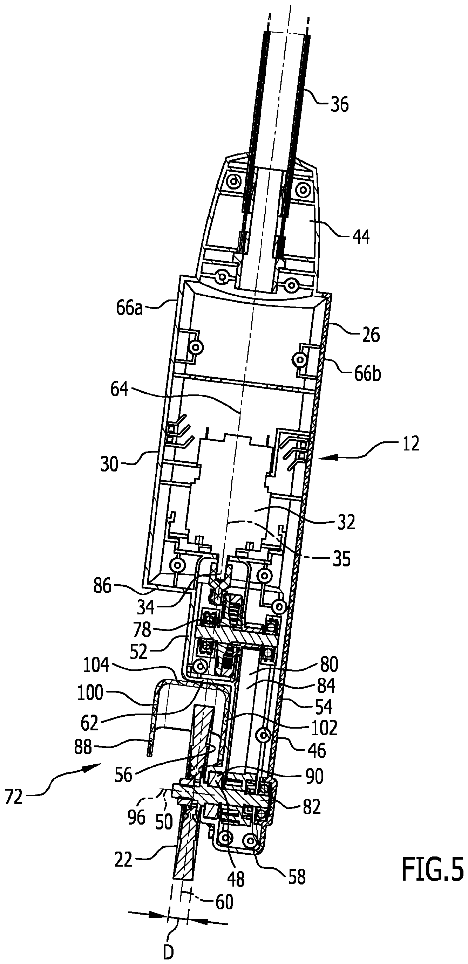

Die Motoreinheit 12 umfasst eine Gehäuseeinrichtung 24. Bei einem Ausführungsbeispiel umfasst die Gehäuseeinrichtung 24 eine Unterschale 26 und eine Oberschale 28, welche mit der Unterschale 26 verbunden ist. In den Figuren 4 und 5 ist die Oberschale 28 entfernt.

Die Gehäuseeinrichtung 24 hat einen ersten Bereich 30, in welchem ein Antriebsmotor 32 angeordnet ist.

Der Antriebsmotor 32 ist bei einer Ausführungsform ein Elektromotor. Es ist grundsätzlich auch möglich, dass der Antriebsmotor beispielsweise ein Verbrennungsmotor ist.

Der Antriebsmotor 32 hat eine Welle 34 mit einer Rotationsachse 35.

Die Haltestabeinrichtung 14 umfasst bei einer Ausführungsform einen Haltestab 36, welcher einteilig oder mehrteilig ausgebildet sein kann. Bei dem in den Figuren 1 bis 7 gezeigten Ausführungsbeispiel ist der Haltestab 36 zweiteilig ausgebildet mit einem ersten Stabelement 38a und einem zweiten Stabelement 38b. Das erste Stabelement 38a ist in das zweite Stabelement 38b eingetaucht. Die Position des ersten Stabelements 38a zu dem zweiten Stabelement 38b ist über eine Feststelleinrichtung 40 feststellbar einstellbar. Der Haltestab 36 mit dem ersten Stabelement 38a und dem zweiten Stabelement 38b ist teleskopierbar. Über die Feststelleinrichtung 40 lässt sich eine Länge des Haltestabs 36 und damit der Haltestabeinrichtung 14 einstellen. Dadurch lässt sich der Abstand zwischen der Griffeinheit 16 und der Motoreinheit 12 feststellbar einstellen bzw. eine Länge der Unkraut-Fugenfräse 10 zwischen dem distalen Ende 18 und dem proximalen Ende 20 lässt sich feststellbar einstellen. Dies ermöglicht eine Anpassung der Unkraut-Fugenfräse 10 an unterschiedliche Bedienergrößen.

Der Haltestab 36 hat eine Längserstreckungsrichtung 42. Bei einem Ausführungsbeispiel ist die Rotationsachse 35 parallel oder koaxial zu dieser Längserstreckungsrichtung 42.

Die Gehäuseeinrichtung 24 weist ferner einen zweiten Bereich 44 auf, welcher sich an den ersten Bereich 30 in Richtung der Haltestabeinrichtung 14 anschließt. An dem zweiten Bereich 44 ist der Haltestab 36 und dabei das erste Stabelement 38a fixiert; der zweite Bereich 44 bildet einen Verbindungsbereich bzw. Fixierungsbereich, über welchen die Haltestabeinrichtung 14 an der Motoreinheit 12 montiert ist.

Die Gehäuseeinrichtung 24 weist ferner einen dritten Bereich 46 auf, welcher sich an den ersten Bereich 30 in Richtung des distalen Endes 18 anschließt.

An dem dritten Bereich 46 der Gehäuseeinrichtung 24 ist über ein Lager 48 die Bürstenscheibe 22 um eine Drehachse 50 drehbar (rotierbar) gelagert. Die Drehachse 50 liegt quer und insbesondere senkrecht zu der Rotationsachse 35. Sie liegt ferner quer und insbesondere senkrecht zu der Längserstreckungsrichtung 42 der Haltestabeinrichtung 14.

Der dritte Bereich 46 der Gehäuseeinrichtung 24 weist einen ersten Schenkel 52 und einen zweiten Schenkel 54 auf. Der erste Schenkel 52 schließt sich an den ersten Bereich 30 an. Der zweite Schenkel 54 ist quer zu dem ersten Schenkel 52 orientiert und mindestens näherungsweise parallel zu der Rotationsachse 35 orientiert.

In einem Teilbereich der Gehäuseeinrichtung 24, welcher den dritten Bereich 46 umfasst, hat die Gehäuseeinrichtung 24 in Draufsicht in der Richtung A eine L-Form mit dem ersten Schenkel 52 und dem zweiten Schenkel 54 und einem Freiraum 56 (vgl. beispielsweise Figur 5) zwischen dem ersten Schenkel 52 und dem zweiten Schenkel 54.

Das Lager 48 ist an dem zweiten Schenkel 54 angeordnet und dabei im Bereich eines Endes 58 des zweiten Schenkels 54 (entsprechend einem Ende des dritten Bereichs 46) positioniert.

Die Bürstenscheibe 22 ist in dem Freiraum 56 positioniert. Eine Mittelebene 60 (vgl. Figur 5) der Bürstenscheibe 22 schneidet eine Wandung 62 der Gehäuseeinrichtung 24, welche eine Wandung des ersten Schenkels 52 ist. Diese Wandung 62 ist insbesondere senkrecht zu der Rotationsachse 35 bzw. der Längserstreckungsrichtung 42 orientiert.

Die Motoreinheit 12 hat eine erste Mittelebene 64, welche senkrecht zu der Drehachse 50 orientiert ist. (Ein Richtungsvektor für die Drehachse 50 ist ein Normalenvektor zu der ersten Mittelebene 64.)

Die erste Mittelebene 64 liegt dabei mittig zwischen lateralen Begrenzungswänden 66a, 66b der Motoreinheit 12 bezogen auf die Richtung der Drehachse 50 (vgl. beispielsweise Figur 5).

Die erste Mittelebene 64 ist ein geometrisches Gebilde, welches die Motoreinheit 12 charakterisiert.

Die Haltestabeinrichtung 14 weist eine zweite Mittelebene 68 auf, welche ebenfalls senkrecht zu der Drehachse 50 orientiert ist. Die zweite Mittelebene 68 liegt entsprechend mittig zwischen lateralen Abmessungen der Haltestabeinrichtung 14 in Richtung der Drehachse 50. Insbesondere hat die Haltestabeinrichtung 14 eine Achse, welche in der Längserstreckungsrichtung 42 orientiert ist und auf der zweiten Mittelebene 68 liegt.

Weiterhin hat die Griffeinheit 16 eine dritte Mittelebene 70, welche ebenfalls senkrecht zu der Drehachse 50 liegt. Die dritte Mittelebene 70 liegt mittig zwischen lateralen Abmessungen der Griffeinheit 16 bezogen auf die Richtung der Drehachse 50.

Bei der Unkraut-Fugenfräse 10 fallen die erste Mittelebene 64, die zweite Mittelebene 68 und die dritte Mittelebene 70 zusammen.

Es ist jedoch grundsätzlich möglich, dass die erste Mittelebene und die zweite Mittelebene bzw. die erste Mittelebene und die dritte Mittelebene bzw. die zweite Mittelebene und die dritte Mittelebene nicht zusammenfallen.

Die Bürstenscheibe 22 ist bei einer Ausführungsform so an der Motoreinheit 12 gelagert, dass ihre Mittelebene 60 (senkrecht zur Drehachse 50) auf der ersten Mittelebene 64 liegt, oder höchstens einen kleinen Abstand zu dieser ersten Mittelebene 64 hat.

Insbesondere ist dieser "kleine Abstand" derart, dass die Bürstenscheibe 22 so an der Motoreinheit 12 positioniert, dass ein Abstand ihrer Mittelebene 60 zu der ersten Mittelebene 64 höchstens das Zweifache einer Dicke D der Bürstenscheibe 22 in Richtung der Drehachse 50 (vgl. Figur 5) beträgt und insbesondere dieser Abstand höchstens der Dicke D entspricht.

Wie erwähnt, liegt bei dem gezeigten Ausführungsbeispiel die Bürstenscheibe 22 bezogen auf ihre Mittelebene 60 an der ersten Mittelebene 64 und damit symmetrisch zu der ersten Mittelebene 64. Damit liegt die Bürstenscheibe 22 bezogen auf ihre Mittelebene 60 auch an der zweiten Mittelebene 68 und der dritten Mittelebene 70.

Die Bürstenscheibe 22 ist über das Lager 48 einseitig an der Motoreinheit 12 gelagert. Insbesondere ist dabei das Lager 48 beabstandet zu der ersten Mittelebene 64.

Es ist ferner insbesondere vorgesehen, dass der zweite Schenkel 54, um eine symmetrische Positionierung der Bürstenscheibe 22 bezogen auf die erste Mittelebene 64 zu ermöglichen, beabstandet zu der ersten Mittelebene 64 ist.

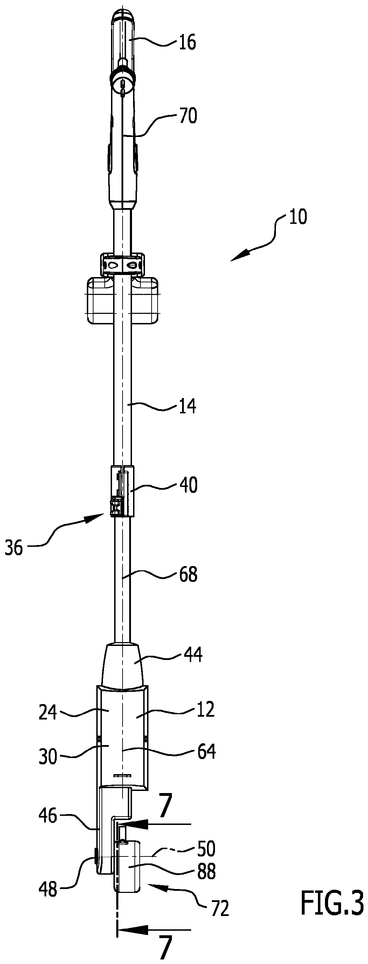

Nicht erfindungsgemäß ist es auch möglich, dass die Bürstenscheibe 22 zweiseitig gelagert ist. Durch die erfindungsgemäße einseitige Lagerung ergibt sich eine erhöhte Randgängigkeit der Unkraut-Fugenfräse 10. Zu einer Seite 72 hin (vgl. Figur 3) ist die Motoreinheit 12 nicht durch Teile der Gehäuseeinrichtung 24 behindert und es kann in diesem Bereich nahe an Randsteine, Wände und dergleichen angefahren werden.

An dem ersten Schenkel 52 ist mindestens teilweise der Antriebsmotor 32 positioniert. Bei dem gezeigten Ausführungsbeispiel ist an dem ersten Schenkel 52 die Welle 34 mindestens in einem Teilbereich positioniert. Es ist grundsätzlich auch möglich, dass weitere Motorteile außerhalb der Welle und am ersten Schenkel 52 positioniert sind.

Es ist eine Drehmomentübertragungseinrichtung 74 vorgesehen, über welche ein Drehmoment des Antriebsmotors 32 von der Welle 34 zu der beabstandeten Bürstenscheibe 22 übertragbar ist.

Bei einem Ausführungsbeispiel umfasst die Drehmomentübertragungseinrichtung 74 einen Drehzahluntersetzer 76, welcher eine Drehzahl der Welle 34 des Antriebsmotors 32 erniedrigt.

Bei einem Ausführungsbeispiel weist der Antriebsmotor 32 eine Drehzahl von beispielsweise 20.000 U/min auf. Der Drehzahluntersetzer sorgt für eine Untersetzung der Drehzahl auf beispielsweise ca. 2000 U/min, wobei dann eine Rotation der Bürstenscheibe 22 um die Drehachse 50 mit der genannten unteren Drehzahl erfolgt.

Die Drehmomentübertragungseinrichtung 74 weist ferner ein Winkelgetriebe 78 auf. Das Winkelgetriebe 78 dient dazu, das Drehmoment so umzulenken (von der ersten Mittelebene 64 so wegzuführen), dass eine Übertragung durch den zweiten Schenkel 54 hindurch auf die Bürstenscheibe 22 ermöglicht ist.

Bei einem Ausführungsbeispiel ist der Drehzahluntersetzer 76 in das Winkelgetriebe 78 integriert.

Insbesondere ist das Winkelgetriebe 78 mit dem Drehzahluntersetzer 76 in dem dritten Bereich 46 der Gehäuseeinrichtung 24 an dem ersten Schenkel 52 angeordnet.

Die Drehmomentübertragungseinrichtung 74 weist ferner eine Drehmomentübertragungsstrecke 80 auf. Diese Drehmomentübertragungsstrecke 80 ist an das Winkelgetriebe 78 und an eine Welle 82 der Bürstenscheibe 22 gekoppelt. Die Drehmomentübertragungsstrecke 80 dient zur Übertragung des Drehmoments auf der Strecke zwischen dem ersten Schenkel 52 und dem Lager 48. Die Drehmomentübertragungsstrecke 80 ist in dem zweiten Schenkel 54 angeordnet.

Bei einem Ausführungsbeispiel ist die Drehmomentübertragungsstrecke 80 durch einen Riemenantrieb 84 gebildet.

Die Drehmomentübertragungsstrecke 80 kann auch auf andere Weise, wie beispielsweise durch eine Zahnradstrecke oder dergleichen, gebildet sein.

Die Motoreinheit 12 ist so ausgebildet, dass ihr Schwerpunkt auf der ersten Mittelebene 64 liegt oder höchstens einen kleinen Abstand zu der ersten Mittelebene 64 aufweist, welcher höchstens das Zweifache der Dicke D der Bürstenscheibe 22 und insbesondere kleiner ist als diese Dicke D.

Es ist beispielsweise möglich, dass der Antriebsmotor 32 mit einer Mittelebene bzw. Symmetrieebene etwas zu der ersten Mittelebene 64 versetzt ist, um einen Ausgleich bezüglich der nicht symmetrischen Anordnung der Drehmomentübertragungseinrichtung 74 zu der ersten Mittelebene 64 zu erhalten, um so den Gesamtschwerpunkt der Motoreinheit 12 auf der Mittelebene 64 zu erhalten.

Bei der Unkraut-Fugenfräse 10 ist zwischen dem ersten Bereich 30 der Gehäuseeinrichtung 24 und dem ersten Schenkel 52 an der Seite 72 ein Absatz 86 gebildet. An diesem Absatz 86 hat der erste Schenkel 12 eine kleinere Breite parallel zu der Drehachse 50 als die Gehäuseeinrichtung 24 an dem ersten Bereich 30, an welchem der Schenkel 52 sitzt. Es ergibt sich so eine höhere Randgängigkeit und es lässt sich ferner Material einsparen.

Der Bürstenscheibe 22 ist eine Schutzhaube 88 zugeordnet. Die Schutzhaube 88 deckt bei ordnungsgemäßem Betrieb der Unkraut-Fugenfräse 10 (Figuren 1 bis 5) die Bürstenscheibe 22 nach oben hin (zu dem Bediener hin; vgl. die Richtung A in Figur 1) ab.

Die Schutzhaube 88 ist an dem zweiten Schenkel 54 in dem Freiraum 56 positioniert.

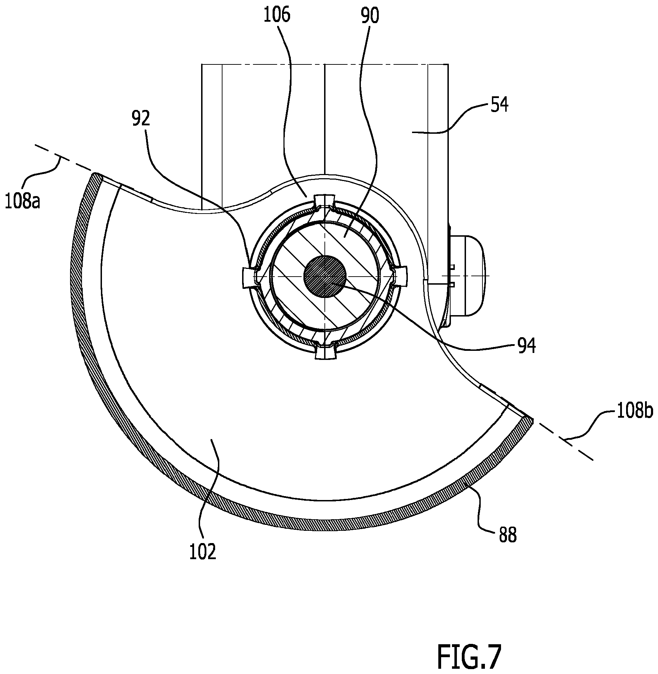

Bei einem Ausführungsbeispiel ist die Schutzhaube 88 schwenkbar bzw. drehbar an der Motoreinheit 12 und dabei an dem zweiten Schenkel 54 positioniert. Die Schutzhaube 88 ist über ein sprechendes Schwenklager 90 (vgl. Figur 5 und Figur 7) gelagert.

Sie weist stufenlose oder abgestufte Fixierungsstellungen 92 auf. Bei dem gezeigten Ausführungsbeispiel weist die Schutzhaube 88 vier ausgezeichnete Fixierungsstellungen (Raststellungen) auf, welche sich in einem Schwenkwinkel von 90° unterscheiden.

Eine Schwenkachse 94 des Schwenklagers 90 ist dabei insbesondere parallel oder koaxial zu der Drehachse 50.

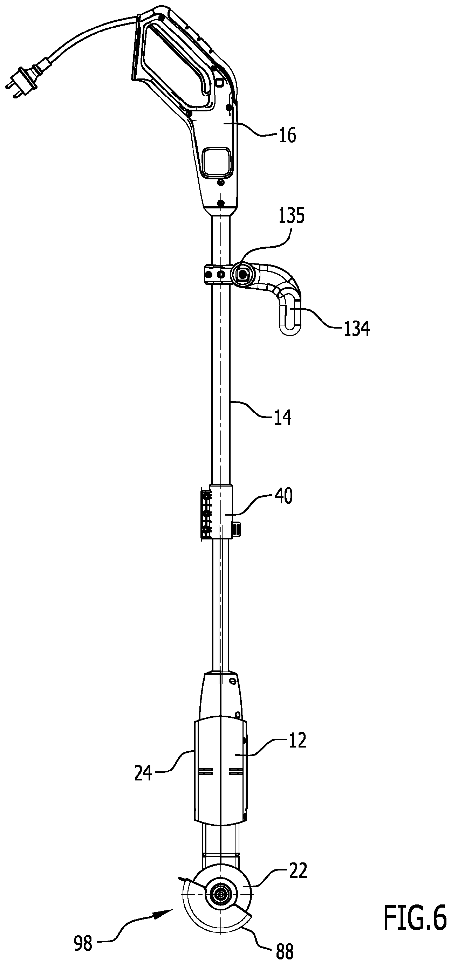

Es ist insbesondere vorgesehen, dass die Schutzhaube 88 eine Schwenkstellung 98 (Figur 6) aufweist, in welcher sie die Bürstenscheibe 22 abdeckt, und zwar derart, dass die Bürstenscheibe 22 nicht operativ ist. Diese Schwenkstellung 98 ist eine andere Schwenkstellung als eine operative Schwenkstellung für einen Fräsbetrieb (Figuren 1 bis 5). Es kann dann die Unkraut-Fugenfräse 10 über die Schutzhaube 88 auf einer Unterlage abgestützt werden, wobei Bürsten der Bürstenscheibe 22 sich dann nicht an dieser Unterlage abstützen. Dadurch werden die entsprechenden Bürsten der Bürstenscheibe 22 nicht gestaucht und beschädigt; grundsätzlich kann ein längeres Abstützen und Bürsten der Bürstenscheibe 22 zu deren Beschädigung bzw. Verschleiß führen, insbesondere wenn sie das Gewicht oder einen Großteil des Gewichts der Unkraut-Fugenfräse 10 aufnehmen müssen.

Die Schwenkstellung 98 ist eine Schwenkstellung, bei welcher die Unkraut-Fugenfräse 10 stehend oder auch liegend gelagert werden kann, wobei die Schutzhaube 88 eine Abstützung an der Unterlage ermöglicht, ohne Bürstenberührung mit der Unterlage.

Die Schutzhaube 88 weist bei einem Ausführungsbeispiel eine erste Wandung 100, eine gegenüberliegende zweite Wandung 102 und eine dritte Wandung 104 auf, welche die erste Wandung 100 und die zweite Wandung 102 miteinander verbindet.

Die dritte Wandung 104 deckt die Bürstenscheibe 22 stirnseitig ab. Über die zweite Wandung 102 ist die Schutzhaube 88 an der Motoreinheit 12 fixiert bzw. schwenkbar gelagert.

Die erste Wandung 100 und die zweite Wandung 102 sind beispielsweise parallel zueinander ausgerichtet und die dritte Wandung 104 ist quer und insbesondere senkrecht zu der ersten Wandung 102 der Wandung 102 orientiert.

Die erste Wandung 100 und die zweite Wandung 102 sind beispielsweise kreissegmentförmig ausgebildet, wobei die zweite Wandung 102 einen Bereich 106 zur Lagerung an dem Schwenklager 94 aufweist.

Die zweite Wandung 102 weist beispielsweise Begrenzungslinien 108a, 108b auf (Figur 7), wobei die Begrenzungslinien 108a, 108b mindestens näherungsweise zusammenfallen. Die zweite Wandung 102 hat dann mindestens näherungsweise außerhalb des Bereichs 106 eine Halbkreisform.

Die Schwenkstellung 98 ist dann derart, dass die Begrenzungslinien 108a, 108b der zweiten Wandung 102 dem ersten Schenkel 52 zugewandt sind.

In einem operativen Betrieb (Figur 1) sind die Begrenzungslinien 108a, 108b der zweiten Wandung 102 zu dem ersten Schenkel 52 abgewandt, so dass die Bürstenscheibe 22 in einer Fuge wirken kann.

Im operativen Betrieb der Unkraut-Fugenfräse 10 deckt die Schutzhaube 88 die Bürstenscheibe 22 nach oben (in Gegenrichtung zu der Richtung A gemäß Figur 1) und damit zu dem Bediener hinab, um eben den Bediener zu schützen.

Bei einem Ausführungsbeispiel ist die Schutzhaube 88 mit einer Markierung 110, wie beispielsweise einem Pfeil versehen, welcher bei einer Stellung der Schutzhaube 88 für einen operativen Betrieb eine Scheibenebene der Bürstenscheibe 22 und beispielsweise die Mittelebene 60 anzeigt. Dadurch wird die Position der durch die Schutzhaube 88 verdeckten Bürstenscheibe 22 für einen Bediener sichtbar markiert.

Ein Bediener kann dadurch sofort erkennen, wie er die Unkraut-Fugenfräse 10 positionieren muss, damit die Bürstenscheibe 22 in eine Fuge eintauchen kann.

Die Markierung 110 kann an der Schutzhaube 88 beispielsweise aufgedruckt sein. Es ist grundsätzlich auch möglich, dass die Markierung 110 durch die Ausbildung der Schutzhaube 88 erreicht ist, indem beispielsweise die dritte Wandung 104 im Querschnitt winklig ausgebildet ist, wobei eben dann eine Scheitellinie die Markierung 110 bildet.

Alternativ oder zusätzlich ist es möglich, dass die Motoreinheit 12 und dabei insbesondere die Gehäuseeinrichtung 24 (und dabei insbesondere die Oberschale 28) mit einer Markierung 112 (Figur 1) versehen ist. Die Markierung 112 ist dabei ebenfalls so angeordnet, dass sie die Scheibenposition der Bürstenscheibe 22 und beispielsweise die Position der Mittelebene 60 andeutet.

Die Markierung 112 hat die gleiche Funktion wie die Markierung 110.

Es kann ferner alternativ oder zusätzlich vorgesehen sein, dass an der Haltestabeinrichtung 14 eine entsprechende Markierung angeordnet oder gebildet ist, welche die Position der Bürstenscheibe 22 charakterisiert.

Insbesondere liegt die Markierung 110 bzw. die Markierung 112 oder eine an der Haltestabeinrichtung 14 angeordnete Markierung auf der entsprechenden ersten Mittelebene 64.

Die Schutzhaube 88 kann auch aus einem durchsichtigen Material hergestellt sein. Durch sie hindurch ist die Bürstenscheibe 22 sichtbar. Dies bildet ebenfalls eine Markierung für die Position der Bürstenscheibe 22.

Die Griffeinheit 16 hat an einem proximalen Endbereich der Unkraut-Fugenfräse einen Griffbereich 114 für einen Hand-Aufgriff (Speichgriff), so dass ein Bediener die Griffeinheit 16 mit einer Hand halten kann.

Beispielsweise umfasst die Griffeinheit 16 einen ersten Bereich 116, über welchen die Griffeinheit 16 an der Haltestabeinrichtung 14 gehalten ist.

Bei einem Ausführungsbeispiel ist an dem ersten Bereich 116 ein Betätigungsschalter 118 angeordnet, über welchen der Antriebsmotor 32 schaltbar ist, um eine Rotation der Bürstenscheibe 22 zu bewirken.

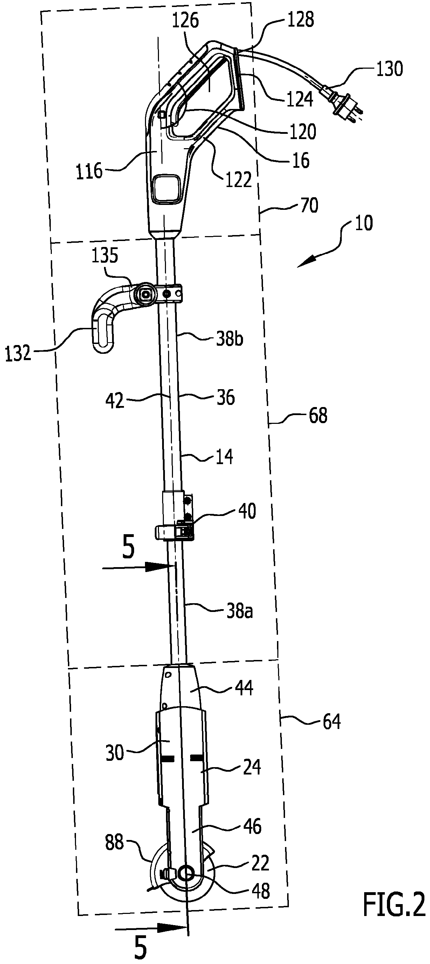

Der Griffbereich 114 sitzt an dem ersten Bereich 116 und ist beispielsweise in einem Winkel 120 zu diesem orientiert (Figur 2). Dieser Winkel 120 ist größer als 90° und beträgt bei einem Ausführungsbeispiel ca. 135°.

Der Griffbereich 114 kann mit einer Hand umfasst werden.

Gegenüberliegend zu dem Griffbereich 114 ist beispielsweise parallel ausgerichtet ein Bügel 122 angeordnet.

Bei einer Ausführungsform sind der Bügel 122 und der Griffbereich 114 durch einen Steg 124 miteinander verbunden.

Zwischen dem Bügel 122 und dem Griffbereich 114 liegt ein Freibereich 126, durch den Finger einer Haltehand durchtauchen können.

Bei der Unkraut-Fugenfräse 10 ist an der Griffeinheit 116 ein Netzanschluss 128 insbesondere mit einem Netzkabel 130 angeordnet. Durch die Griffeinheit 16 und Haltestabeinrichtung 14 hindurch liegt eine elektrische Verbindung mit dem Antriebsmotor 32 vor, um diesen über Netzstrom mit elektrischer Energie versorgen zu können.

Die Unkraut-Fugenfräse 10 umfasst ein weiteres Griffelement 132. Über dieses weitere Griffelement 132 kann ein Bediener die Unkraut-Fugenfräse 10 mit der anderen Hand halten (die erste Hand hält die Griffeinheit 16).

Grundsätzlich kann das weitere Griffelement 132 durch eine Oberfläche des Haltestabs 36 gebildet sein.

Bei einem Ausführungsbeispiel ist das weitere Griffelement 132 so ausgebildet, dass es im Oberbegriff (Ristgriff) oder Untergriff (Kammgriff) mit der anderen Haltehand gehalten werden kann.

Das weitere Griffelement 132 ist an der Haltestabeinrichtung 14 und dabei in dem Haltestab 36 zwischen der Griffeinheit 16 und der Motoreinheit 12 und dabei insbesondere zwischen der Griffeinheit 16 und der Feststelleinrichtung 40 fixiert.

Grundsätzlich ist es möglich, dass das weitere Griffelement 132 feststellbar einstellbar an dem Haltestab 36 sitzt.

Das weitere Griffelement 132 umfasst einen Griffbereich 134, welcher durch einen Bediener im Oberbegriff angefasst werden kann. Dieser Griffbereich 134 ist beabstandet zu der Haltestabeinrichtung 14. Er ist über einen Steg 135 an der Haltestabeinrichtung 14 fixiert.

Durch diese Ausbildung des weiteren Griffelements 132 kann ein Bediener, welcher mit der einen Hand die Griffeinheit 16 an dem Griffbereich 114 hält und mit der anderen Hand den Griffbereich 134 hält, die Unkraut-Fugenfräse 10 schwenken (um eine Achse, welche mindestens näherungsweise parallel oder koaxial zu der Längserstreckungsrichtung 42 ist), um so insbesondere an randnahen Bereichen arbeiten zu können.

### Die Unkraut-Fugenfräse 10 funktioniert wie folgt:

Um die Unkraut-Fugenfräse 10 in operative Bereitschaft zu bringen, wird ausgehend von einer Lagerposition mit der Schwenkstellung 98 der Schutzhaube 88 die Schutzhaube 88 so gelöst, (d. h. insbesondere eine Raststellung aufgehoben), dass diese gedreht werden kann. Sie wird so gedreht, dass für den operativen Betrieb die Bürstenscheibe 22 freigegeben ist und dabei nach oben durch die Schutzhaube 88 abgedeckt ist. Die Begrenzungslinien 108a, 108b sind dann abgewandt zu dem ersten Schenkel 52.

Für den operativen Betrieb kann ein Bediener die Unkraut-Fugenfräse 10 mit der einen Hand an dem Griffbereich 114 halten und mit der anderen Hand an dem weiteren Griffelement 132 halten.

Grundsätzlich kann auch ein Haltegurt vorgesehen sein.

Im Netzantrieb wird das Netzkabel 130 angeschlossen. Durch Betätigung des Schalters 118 wird der Antriebsmotor 32 aktiviert und die Bürstenscheibe 22 rotiert.

Diese kann dann in Fugen eingetaucht werden und es erfolgt eine Unkrautentfernung an Fugen.

Bei einer Ausführungsform rotiert dabei die Bürstenscheibe 22 mit ca. 2000 U/min.

Ein Bediener kann dabei stehend eine Fugenreinigung durchführen.

Eine Gesamtlänge der Unkraut-Fugenfräse 10 zwischen dem proximalen Ende 20 und dem distalen Ende 18 beträgt insbesondere mindestens 50 cm.

Bei einer Ausführungsform weist die Bürstenscheibe 22 einen Durchmesser (senkrecht zur Drehachse 50) von beispielsweise ca. 100 mm auf. Die Dicke D parallel zur Drehachse 50 liegt beispielsweise im Bereich zwischen 7 mm und 16 mm.

Die Bürstenscheibe 22 umfasst insbesondere Borsten aus einem Kunststoffmaterial, welche an einem Halter angeordnet sind. Die Welle 82 wiederum ist drehfest mit diesem Halter verbunden. Die Borsten sind beispielsweise radial ausgerichtet.

Beispielsweise ist die Bürstenscheibe 22 mit ca. 500 Borsten versehen, welche an dem Halter angeordnet sind.

Bei ordnungsgemäßem Betrieb der Unkraut-Fugenfräse 10 deckt die Schutzhaube 88 zu dem Bediener hin die Bürstenscheibe 22 ab. Die Markierung 110, 112 zeigt dem Bediener an, wo die Bürstenscheibe 22 positioniert ist, beziehungsweise um so ein Führen der Unkraut-Fugenfräse insbesondere für das Eintauchen in eine Fuge zu erleichtern.

Die Bürstenscheibe 22 ist exakt zu der ersten Mittelebene 64 bzw. der zweiten Mittelebene 68 bzw. der dritten Mittelebene 70 ausgerichtet bzw. mindestens näherungsweise dazu. Dadurch folgt für einen Bediener ein erleichtertes Arbeiten. Ein Ansetzen an einer Fuge ist für einen Bediener auf einfache Weise und insbesondere intuitiv durchführbar. Dadurch lässt sich insbesondere ein Bürstenverschleiß minimieren, und es lässt sich ein effektiver, zeitsparender Säuberungsvorgang durchführen.

Durch die Ausbildung der Motoreinheit 12 mit einseitig gelagerter Bürstenscheibe 22 sowie durch die Anordnung und Ausbildung der Griffeinheit 16 des weiteren Griffelements 132 ergibt sich eine hohe Randgängigkeit, so dass auch an randnahen Bereichen beispielsweise zu Wänden eine effektive Fugenreinigung möglich ist.

Für die Fugenreinigung taucht die Bürstenscheibe 22 in eine Fuge ein (welche naturgemäß höchstens eine Breite entsprechend der Dicke D aufweisen kann), und es wird durch mechanische Beaufschlagung mit der Bürstenscheibe 22 in der Fuge Unkraut "ausgefräst".

Grundsätzlich ist es möglich, dass die Unkraut-Fugenfräse mehr als eine Bürstenscheibe 22 aufweist. Es ist dann insbesondere vorgesehen, dass bei einer Mehrzahl von Bürstenscheiben 22 diese fluchtend bezüglich der ersten Mittelebene 64 hintereinander angeordnet sind.

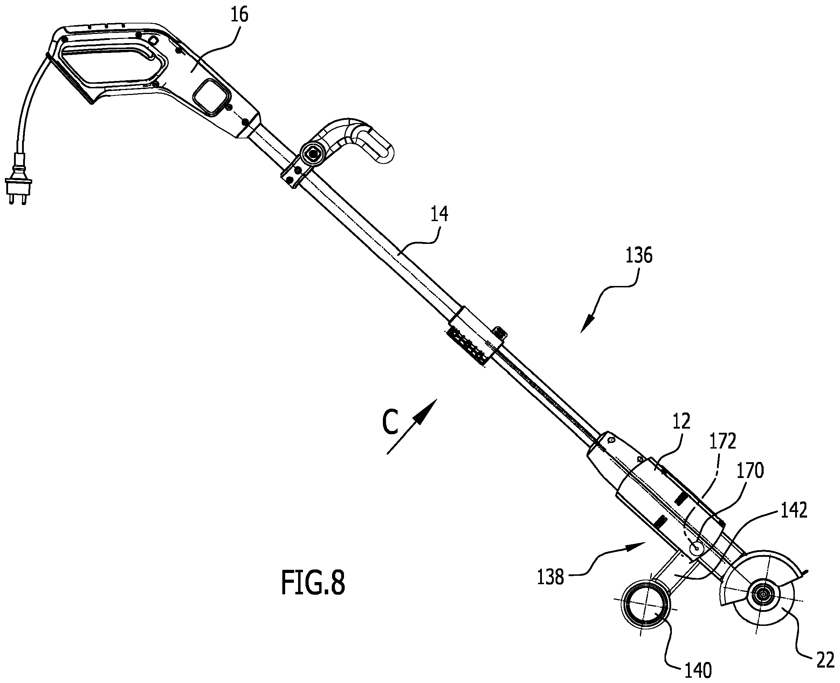

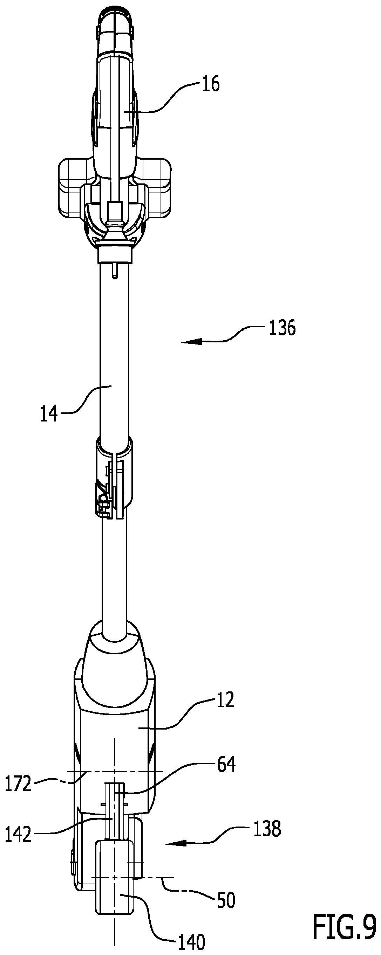

Bei einer Variante der Unkraut-Fugenfräse 10, welche in den Figuren 8 und 9 gezeigt und mit 136 bezeichnet ist, ist eine zusätzliche Stützeinrichtung 138 vorgesehen, über welche beabstandet zu der Bürstenscheibe 22 die Unkraut-Fugenfräse 136 an einer Unterlage abstützbar ist.

Bei einem Ausführungsbeispiel umfasst die Stützeinrichtung 138 eine Rolle 140, welche über einen Halter 142 an der Motoreinheit zwölf fixiert ist.

Die Rolle 140 ist dabei mindestens näherungsweise symmetrisch zu der ersten Mittelebene 64 angeordnet. Die Rolle 140 weist eine größere Dicke parallel zu der Drehachse 50 auf als die Bürstenscheibe 22. Die Rolle 140 weist insbesondere eine solche Dicke auf, dass sie nicht in eine entsprechende Fuge eintauchen kann, sondern dass die Fugen mit ihr überfahrbar sind.

Die Stützeinrichtung 138 ermöglicht eine zusätzliche Stützung an einer zu bearbeitenden Unterlage, so dass ein Bediener weniger Kraftaufwand zum Halten der Unkraut-Fugenfräse 136 benötigt.

Die Stützeinrichtung 138 mit der Rolle 140 als Stützelement ist so symmetrisch angeordnet, dass sie kein Kippmoment oder dergleichen erzeugt.

Es ist grundsätzlich auch möglich, dass die Stützeinrichtung 138 mehrere Stützelemente wie Rollen aufweist. Es ist dabei insbesondere vorgesehen, dass bei mehreren Stützelementen diese symmetrisch bezüglich der ersten Mittelebene 64 angeordnet sind, um insbesondere Kippmomente oder dergleichen zu minimieren.

Die Stützeinrichtung 138 kann beweglich ausgebildet sein. Bei einer Ausführungsform ist sie über ein Schwenklager 170 an der Motoreinheit 12 gelagert. Eine Schwenkachse 172 des Schwenklagers 170 liegt parallel zur Drehachse 50. Es ist dadurch eine Anpassbarkeit einer Winkelausrichtung der Unkraut-Fugenfräse zu einer Unterlage bei Abstützung durch die Stützeinrichtung 138 ermöglicht.

Die Stützeinrichtung 138 kann beispielsweise an dem Schwenklager 170 federgestützt sein.

Sie kann beispielsweise ihre Beweglichkeit auch durch einen (insbesondere federgestützten) Teleskopstab erhalten.

Ansonsten ist die Unkraut-Fugenfräse 136 wie die Unkraut-Fugenfräse 10 ausgebildet.

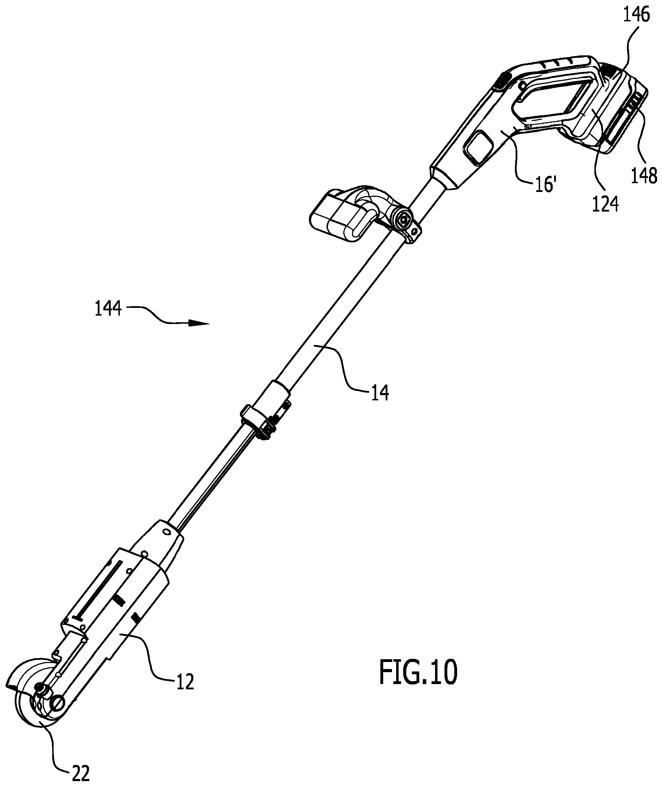

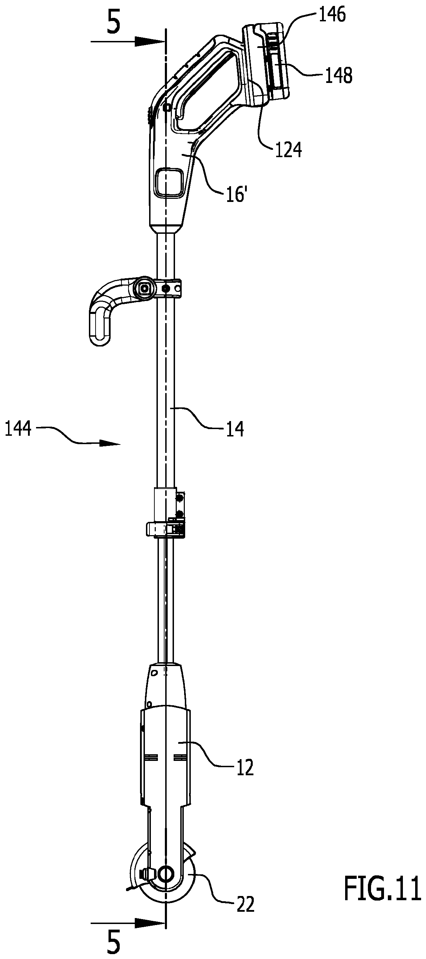

Ein zweites Ausführungsbeispiel einer erfindungsgemäßen Fugenfräse, welche in den Figuren 10 und 11 gezeigt und mit 144 bezeichnet ist, entspricht im grundsätzlichen Aufbau der Unkraut-Fugenfräse 10, wobei für gleiche Elemente gleiche Bezugszeichen verwendet werden. Es ist eine Griffeinheit 16' vorgesehen, welche grundsätzlich ausgebildet ist, wie die Griffeinheit 16, wobei an einem entsprechenden Steg 124 der Griffeinheit 16' ein Halter 146 für eine wiederaufladbare Batterieeinrichtung 148 angeordnet ist. Die wiederaufladbare Batterieeinrichtung 148 erlaubt einen netzunabhängigen Betrieb der Unkraut-Fugenfräse 144.

Ansonsten ist die Unkraut-Fugenfräse 144 wie die Unkraut-Fugenfräse 10 ausgebildet und funktioniert auf die gleiche Art und Weise.

Die Batterieeinrichtung kann auch an der Haltestabeinrichtung 14 oder der Motoreinheit 12 angeordnet sein.

Sie kann abnehmbar (zum Laden an einem Ladegerät) sein oder fester Bestandteil sein.

### Bezugszeichenliste

- 10: Unkraut-Fugenfräse (erstes Ausführungsbeispiel)
- 12: Motoreinheit
- 14: Haltestabeinrichtung
- 16: Griffeinheit
- 16': Griffeinheit
- 18: distales Ende
- 20: proximales Ende
- 22: Bürstenscheibe
- 24: Gehäuseeinrichtung
- 26: Unterschale
- 28: Oberschale
- 30: erster Bereich
- 32: Antriebsmotor
- 34: Welle
- 35: Rotationsachse
- 36: Haltestab
- 38a: erstes Stabelement
- 38b: zweites Stabelement
- 40: Feststelleinrichtung
- 42: Längserstreckungsrichtung
- 44: zweiter Bereich
- 46: dritter Bereich
- 48: Lager
- 50: Drehachse
- 52: erster Schenkel
- 54: zweiter Schenkel
- 56: Freiraum
- 58: Ende
- 60: Mittelebene
- 62: Wandung
- 64: erste Mittelebene
- 66a: laterale Begrenzungswand
- 66b: laterale Begrenzungswand
- 68: zweite Mittelebene
- 70: dritte Mittelebene
- 72: Seite
- 74: Drehmomentübertragungseinrichtung
- 76: Drehzahluntersetzer
- 78: Winkelgetriebe
- 80: Drehmomentübertragungsstrecke
- 82: Welle
- 84: Riemenantrieb
- 86: Absatz
- 88: Schutzhaube
- 90: Schwenklager
- 92: Fixierungsstellung
- 94: Schwenklager
- 96: Schwenkachse
- 98: Schwenkstellung
- 100: erste Wandung
- 102: zweite Wandung
- 104: dritte Wandung
- 106: Bereich
- 108a: Begrenzungslinie
- 108b: Begrenzungslinie
- 110: Markierung
- 112: Markierung
- 114: Griffbereich
- 116: erster Bereich
- 118: Betätigungsschalter
- 120: Winkel
- 122: Bügel
- 124: Steg
- 126: Freibereich
- 128: Netzanschluss
- 130: Netzkabel
- 132: weiteres Griffelement
- 134: Griffbereich
- 135: Steg
- 136: Variante
- 138: Stützeinrichtung
- 140: Rolle
- 142: Halter
- 144: Unkraut-Fugenfräse (zweites Ausführungsbeispiel)
- 146: Halter
- 148: Batterieeinrichtung
- 170: Schwenklager
- 172: Schwenkachse

## Patentansprüche

1. Unkraut-Fugenfräse, umfassend eine Bürstenscheibe (22), welche um eine Drehachse (50) drehbar gelagert ist, eine Motoreinheit (12) mit einem Antriebsmotor (32) für die Bürstenscheibe (22) und mit einer ersten Mittelebene (64), welche mittig zwischen lateralen Begrenzungswänden (66a, 66b) der Motoreinheit (12) bezogen auf die Richtung der Drehachse (50) liegt und senkrecht zu der Drehachse (50) orientiert ist, wobei die Bürstenscheibe (22) einseitig an einem Schenkel (54) gelagert ist, eine Haltestabeinrichtung (14), an welcher die Motoreinheit (12) angeordnet ist und welche eine zweite Mittelebene (68) senkrecht zu der Drehachse (50) hat, wobei die zweite Mittelebene (68) mittig zwischen lateralen Abmessungen der Haltestabeinrichtung (14) in Richtung der Drehachse (50) liegt, und eine Griffeinheit (16), welche an der Haltestabeinrichtung (14) an einem proximalen Ende (20) der Unkraut-Fugenfräse angeordnet ist und welche eine dritte Mittelebene (70) senkrecht zu der Drehachse (50) hat, wobei die dritte Mittelebene (70) mittig zwischen lateralen Abmessungen der Griffeinheit (16) bezogen auf die Richtung der Drehachse (50) liegt, **dadurch gekennzeichnet, dass** die Bürstenscheibe (22) an der ersten Mittelebene (64) liegt, wobei eine Mittelebene (60) der Bürstenscheibe (22) und die erste Mittelebene (64) zusammenfallen, oder höchstens einen Abstand einer zweifachen Dicke (D) der Bürstenscheibe (22) in einer Richtung parallel zu der Drehachse (50) zu der ersten Mittelebene (64) hat, und dass an einem distalen Ende (18) der Unkraut-Fugenfräse die Motoreinheit (12) liegt.

2. Unkraut-Fugenfräse nach Anspruch 1, **gekennzeichnet durch** mindestens eines der Folgenden:
die erste Mittelebene (64) und die zweite Mittelebene (68) fallen zusammen; die zweite Mittelebene (68) und die dritte Mittelebene (70) fallen zusammen; die erste Mittelebene (64) und die dritte Mittelebene (70) fallen zusammen.

3. Unkraut-Fugenfräse nach einem der vorangehenden Ansprüche,
**gekennzeichnet durch** eine Schutzhaube (88), welche der Bürstenscheibe (22) zugeordnet ist, und welche bei ordnungsgemäßem Betrieb der Unkraut-Fugenfräse in Draufsicht für einen Bediener die mindestens eine Bürstenscheibe (22) abdeckt.

4. Unkraut-Fugenfräse nach einem der vorangehenden Ansprüche,
**gekennzeichnet durch** mindestens eine Markierung (110; 112), welche für einen Bediener eine Position der Bürstenscheibe (22) anzeigt und insbesondere eine Scheibenebene anzeigt, an oder in welcher die Bürstenscheibe liegt.

5. Unkraut-Fugenfräse nach Anspruch 4, **dadurch gekennzeichnet, dass** die mindestens eine Markierung (110; 112) an oder mittels einer Schutzhaube (88) für die Bürstenscheibe (22) und/oder an einer Gehäuseeinrichtung (24) der Motoreinheit (12) und/oder an der Haltestabeinrichtung (14) angeordnet oder gebildet ist.

6. Unkraut-Fugenfräse nach einem der vorangehenden Ansprüche, **dadurch gekennzeichnet, dass** die Motoreinheit (12) eine Gehäuseeinrichtung (24) aufweist, in welcher der Antriebsmotor (32) angeordnet ist, und dass die Gehäuseeinrichtung (24) in Draufsicht mindestens in einem Teilbereich eine L-Form mit einem ersten Schenkel (52), dem zweiten Schenkel (54) und einem Freiraum (56) zwischen dem ersten Schenkel (52) und dem zweiten Schenkel (54) hat, wobei der zweite Schenkel (54) quer zu dem ersten Schenkel (52) orientiert ist, und wobei die Bürstenscheibe (22) und/oder eine Schutzhaube (88) für die Bürstenscheibe (22) in dem Freiraum (56) positioniert ist.

7. Unkraut-Fugenfräse nach Anspruch 6, **dadurch gekennzeichnet, dass** der Antriebsmotor (32) mindestens teilweise an dem ersten Schenkel (52) angeordnet ist,
und eine Drehmomentübertragungsstrecke (80) zur Übertragung eines Drehmoments von dem Antriebsmotor (32) zu der Bürstenscheibe (22) mindestens teilweise an dem zweiten Schenkel (54) angeordnet ist.

8. Unkraut-Fugenfräse nach einem der vorhergehenden Ansprüche,
**dadurch gekennzeichnet, dass** der Antriebsmotor (32) eine Welle (34) mit einer Rotationsachse (35) aufweist, welche quer und insbesondere senkrecht zu der Drehachse (50) der Bürstenscheibe (22) orientiert ist, und insbesondere, dass die Rotationsachse (35) auf der ersten Mittelebene (64) liegt oder einen Abstand von höchstens einer zweifachen Dicke (D) der Bürstenscheibe (22) zu der ersten Mittelebene aufweist.

9. Unkraut-Fugenfräse nach einem der vorangehenden Ansprüche, **dadurch gekennzeichnet, dass** die Motoreinheit (12) eine Drehmomentübertragungseinrichtung (74) zur Übertragung eines Drehmoments von dem Antriebsmotor (32) zu der Bürstenscheibe (22) aufweist,
und dass die Drehmomentübertragungseinrichtung (74) mindestens eines der Folgenden umfasst: einen Drehzahluntersetzer (76); ein Winkelgetriebe (78) zur Richtungsumlenkung eines Drehmoments; eine Drehmomentübertragungsstrecke (80) zur Überbrückung eines räumlichen Abstands.

10. Unkraut-Fugenfräse nach einem der vorangehenden Ansprüche, **dadurch gekennzeichnet, dass** ein Schwerpunkt der Motoreinheit (12) auf der ersten Mittelebene (64) liegt oder einen Abstand von höchstens einer zweifachen Dicke (D) der Bürstenscheibe (22) zu der ersten Mittelebene (64) hat.

11. Unkraut-Fugenfräse nach einem der vorangehenden Ansprüche, **dadurch gekennzeichnet, dass** der Schenkel (54) mindestens mit einem Teilbereich beabstandet zu der ersten Mittelebene (64) ist.

12. Unkraut-Fugenfräse nach einem der vorangehenden Ansprüche, **dadurch gekennzeichnet, dass** ein Lager (48), an welchem die Bürstenscheibe (22) gelagert ist, beabstandet zu der ersten Mittelebene (64) ist.

13. Unkraut-Fugenfräse nach einem der vorangehenden Ansprüche, **dadurch gekennzeichnet, dass** der Bürstenscheibe (22) eine schwenkbare oder drehbare Schutzhaube (88) zugeordnet ist, wobei eine Schwenkachse (96) insbesondere mindestens näherungsweise parallel oder koaxial zu der Drehachse (50) der Bürstenscheibe (22) ist,
und insbesondere, dass die Schutzhaube (88) eine Schwenkstellung (96) aufweist, in welcher sie die zugeordnete Bürstenscheibe (22) abdeckt und in welcher die Unkraut-Fugenfräse mit der Schutzhaube (88) auf einer Unterlage abstützbar ist, wobei diese Schwenkstellung (96) von einer operativen Schwenkstellung für einen Fräsbetrieb verschieden ist.

14. Unkraut-Fugenfräse nach einem der vorangehenden Ansprüche, **gekennzeichnet durch** eine Stützeinrichtung (138) zur Abstützung der Unkraut-Fugenfräse beabstandet zu der Bürstenscheibe (22) an einem Untergrund, mit mindestens einem der Folgenden:
- die Stützeinrichtung (138) ist an der Motoreinheit (12) gehalten;
- die Stützeinrichtung (138) weist ein oder mehrere Stützelemente (140) und insbesondere eine oder mehrere Rollen (140) auf;
- das oder die Stützelemente (140) sind symmetrisch zu der ersten Mittelebene (64) angeordnet;
- die Stützeinrichtung (138) ist beweglich und insbesondere schwenkbar mit einer Schwenkachse (172) mindestens näherungsweise parallel zu der Drehachse (50) der Bürstenscheibe (22).

15. Unkraut-Fugenfräse nach einem der vorangehenden Ansprüche, **gekennzeichnet durch** mindestens eines der Folgenden:
- eine Länge der Haltestabeinrichtung (14) zwischen der Motoreinheit (12) und der Griffeinheit (16) beträgt mindestens 30 cm und vorzugsweise mindestens 50 cm;
- eine Einstellbarkeit einer Länge der Unkraut-Fugenfräse zwischen einem distalen Ende (18) und einem proximalen Ende (20).

16. Unkraut-Fugenfräse nach einem der vorangehenden Ansprüche, **gekennzeichnet durch** mindestens eines der Folgenden:
- die Griffeinheit (16) umfasst einen Griffbereich (114) für einen Hand-Aufgriff;
- ein weiteres Griffelement (132), wobei die Unkraut-Fugenfräse über eine Hand an der Griffeinheit (16) und über die andere Hand an dem weiteren Griffelement (132) gehalten werden kann, und das weitere Griffelement (132) weist einen Griffbereich (135) für einen Hand-Oberbegriff oder einen Hand-Untergriff auf.

## Claims

1. Weed-removal groove brush, comprising a brush disc (22), which is mounted so as to be rotatable about an axis of rotation (50), a motor unit (12) with a drive motor (32) for the brush disc (22) and with a first midplane (64), which lies centrally between lateral delimiting walls (66a, 66b) of the motor unit (12) relative to the direction of the axis of rotation (50) and is oriented perpendicularly to the axis of rotation (50), wherein the brush disc (22) is mounted on one side on a leg (54), and comprising a holding rod device (14) on which the motor unit (12) is arranged and which has a second midplane (68) perpendicular to the axis of rotation (50), wherein the second midplane (68) lies centrally between lateral dimensions of the holding rod device (14) in the direction of the axis of rotation (50), and comprising a handle unit (16), which is arranged on the holding rod device (14) at a proximal end (20) of the weed-removal groove brush and which has a third midplane (70) perpendicular to the axis of rotation (50), wherein the third midplane (70) lies centrally between lateral dimensions of the handle unit (16) relative to the direction of the axis of rotation (50), **characterized in that** the brush device (22) lies on the first midplane (64), wherein a midplane (60) of the brush disc (22) and the first midplane (64) coincide, or at most is spaced at a distance of twice the thickness (D) of the brush disc (22) in a direction parallel to the axis of rotation (50) from the first midplane (64), and **in that** the motor unit (12) is located at a distal end (18) of the weed-removal groove brush.

2. Weed-removal groove brush in accordance with Claim 1, **characterized by** at least one of the following:
the first midplane (64) and the second midplane (68) coincide; the second midplane (68) and the third midplane (70) coincide; the first midplane (64) and the third midplane (70) coincide.

3. Weed-removal groove brush in accordance with any one of the preceding Claims, **characterized by** a protective hood (88), which is associated with the brush disc (22) and which covers the at least one brush disc (22) in a top view for a user when the weed-removal groove brush is properly operated.

4. Weed-removal groove brush in accordance with any one of the preceding Claims, **characterized by** at least one marking (110; 112), which indicates to a user a position of the brush disc (22) and, in particular, indicates a disc plane on or in which the brush disc lies.

5. Weed-removal groove brush in accordance with Claim 4, **characterized in that** the at least one marking (110; 112) is arranged or formed on or by means of a protective hood (88) for the brush disc (22) and/or on a housing device (24) of the motor unit (12) and/or on the holding rod device (14).

6. Weed-removal groove brush in accordance with any one of the preceding Claims, **characterized in that** the motor unit (12) has a housing device (24) in which the drive motor (32) is arranged, and
**in that** the housing device (24) in plan view has, at least in a partial region, an L-shape with a first leg (52), the second leg (54), and a free space (56) between the first leg (52) and the second leg (54), wherein the second leg (54) is oriented transversely to the first leg (52), and wherein the brush disc (22) and/or a protective hood (88) for the brush disc (22) is positioned in the free space (56).

7. Weed-removal groove brush in accordance with Claim 6, **characterized in that** the drive motor (32) is arranged at least partially on the first leg (52),
and a torque transmission link (80) for transmitting a torque from the drive motor (32) to the brush disc (22) is arranged at least partially on the second leg (54).

8. Weed-removal groove brush in accordance with any one of the preceding Claims, **characterized in that** the drive motor (32) has a shaft (34) with a rotational axis (35), which is oriented transversely and, in particular, perpendicularly to the axis of rotation (50) of the brush disc (22),
and in particular **in that** the rotational axis (35) lies on the first midplane (64) or is spaced at a distance of at most twice the thickness (D) of the brush disc (22) from the first midplane.

9. Weed-removal groove brush in accordance with any one of the preceding Claims, **characterized in that** the motor unit (12) has a torque transmission device (74) for transmitting a torque from the drive motor (32) to the brush disc (22),
and **in that** the torque transmission device (74) comprises at least one of the following: a rotational speed reducer (76); an angular gear (78) for changing the direction of a torque; a torque transmission link (80) for bridging a spatial distance.

10. Weed-removal groove brush in accordance with any one of the preceding Claims, **characterized in that** the center of gravity of the motor unit (12) lies on the first midplane (64) or is spaced at a distance of at most twice the thickness (D) of the brush disc (22) from the first midplane (64).

11. Weed-removal groove brush in accordance with any one of the preceding Claims, **characterized in that** the leg (54) is spaced at least with a partial region at a distance from the first midplane (64).

12. Weed-removal groove brush in accordance with any one of the preceding Claims, **characterized in that** a bearing (48) on which the brush disc (22) is mounted is spaced at a distance from the first midplane (64).

13. Weed-removal groove brush in accordance with any one of the preceding Claims, **characterized in that** the brush disc (22) is associated with a pivotable or rotatable protective hood (88), wherein a pivot axis (96), in particular, is at least approximately in parallel or coaxial to the axis of rotation (50) of the brush disc (22),
and in particular **in that** the protective hood (88) has a pivot position (96) in which it covers the associated brush disc (22) and in which the weed-removal groove brush is supportable with the protective hood (88) on a base, wherein this pivot position (96) is different from an operative pivot position for a brushing operation.

14. Weed-removal groove brush in accordance with any one of the preceding Claims, **characterized by** a support device (138) for supporting the weed-removal groove brush on a base at a distance from the brush disc (22), with at least one of the following:
- the support device (138) is held on the motor unit (12);
- the support device (138) has one or more support elements (140) and, in particular, one or more rollers (140);
- the support elements(s) is/are arranged symmetrically relative to the first midplane (64);
- the support device (138) is movable and, in particular, pivotable with a pivot axis (172) at least approximately in parallel to the axis of rotation (50) of the brush disc (22).

15. Weed-removal groove brush in accordance with any one of the preceding Claims, **characterized by** at least one of the following:
- a length of the holding rod device (14) between the motor unit (12) and the handle unit (16) is at least 30 cm and preferably at least 50 cm;
- an adjustability of a length of the weed-removal groove brush between a distal end (18) and a proximal end (20).

16. Weed-removal groove brush in accordance with any one of the preceding Claims, **characterized by** at least one of the following:
- the handle unit (16) comprises a gripping region (114) for a hand to be placed thereon;
- a further handle element (132), wherein the weed-removal groove brush is able to be held by way of one hand on the handle unit (16) and by way of the other hand on the further handle element (132), and the further handle element (132) has a gripping region (135) for an overhand grip or an underhand grip.

## Revendications

1. Fraise à désherber les joints, comprenant un disque de brossage (22) monté rotatif autour d'un axe de rotation (50), une unité moteur (12) munie d'un moteur d'entraînement (32) pour le disque de brossage (22) et présentant un premier plan médian (64) situé de manière centrale entre les parois de délimitation (66a, 66b) latérales de l'unité moteur (12) par rapport à la direction de l'axe de rotation (50) et orienté perpendiculairement à l'axe de rotation (50), dans laquelle le disque de brossage (22) est monté d'un seul côté au niveau d'un flanc (54), un dispositif formant barre de support (14) sur lequel est agencée l'unité moteur (12) et qui présente un deuxième plan médian (68) perpendiculaire à l'axe de rotation (50), dans laquelle le deuxième plan médian (68) se situe de manière centrale entre des dimensions latérales du dispositif formant barre de support (14) dans la direction de l'axe de rotation (50), et un ensemble formant poignée (16) agencé au niveau du dispositif formant barre de support (14) à une extrémité proximale (20) de la fraise à désherber les joints et présentant un troisième plan médian (70) perpendiculaire à l'axe de rotation (50), dans laquelle le troisième plan médian (70) se situe de manière centrale entre des dimensions latérales de l'ensemble formant poignée (16) par rapport à la direction de l'axe de rotation (50), **caractérisée en ce que** le disque de brossage (22) est situé au niveau du premier plan médian (64), dans laquelle un plan médian (60) du disque de brossage (22) et le premier plan médian (64) coïncident, ou présente, par rapport au premier plan médian (64) et dans une direction parallèle à l'axe de rotation (50), au maximum une distance dont l'épaisseur (D) correspond au double de celle du disque de brossage (22),
et **en ce que** l'unité moteur (12) se trouve à une extrémité distale (18) de la fraise à désherber les joints.

2. Fraise à désherber les joints selon la revendication 1, **caractérisée par** au moins un des points ci-dessous :
le premier plan médian (64) et le deuxième plan médian (68) coïncident ; le deuxième plan médian (68) et le troisième plan médian (70) coïncident ; le premier plan médian (64) et le troisième plan médian (70) coïncident.

3. Fraise à désherber les joints selon l'une quelconque des revendications précédentes, **caractérisée par** un capot de protection (88) qui est associé au disque de brossage (22) et qui, pour un opérateur observant par en dessus, recouvre le au moins un disque de brossage (22) lorsque la fraise à désherber les joints fonctionne de manière nominale.

4. Fraise à désherber les joints selon l'une quelconque des revendications précédentes, **caractérisée par** au moins un marquage (110 ; 112) qui indique à un opérateur une position du disque de brossage (22) et qui indique en particulier un plan de disque au niveau duquel ou au sein duquel se trouve le disque de brossage.

5. Fraise à désherber les joints selon la revendication 4, **caractérisée en ce que** le au moins un marquage (110 ; 112) est agencé ou formé au niveau ou au moyen d'un capot de protection (88) destiné au disque de brossage (22) et/ou au niveau d'un dispositif de boîtier (24) de l'unité moteur (12) et/ou au niveau du dispositif formant barre de support (14).

6. Fraise à désherber les joints selon l'une quelconque des revendications précédentes, **caractérisée en ce que** l'unité moteur (12) présente un dispositif de boî-tier (24) au sein duquel est agencé le moteur d'entraînement (32),
et **en ce que** le dispositif de boîtier (24) présente en vue de dessus, au moins dans une sous-région, une forme en L avec un premier flanc (52), le second flanc (54) et un espace libre (56) entre le premier flanc (52) et le second flanc (54), dans laquelle le second flanc (54) est orienté transversalement par rapport au premier flanc (52), et dans laquelle le disque de brossage (22) et/ou un capot de protection (88) destiné au disque de brossage (22) est positionné dans l'espace libre (56).

7. Fraise à désherber les joints selon la revendication 6, **caractérisée en ce que** le moteur d'entraînement (32) est agencé au moins partiellement au niveau du premier flanc (52),
et une section de transmission de couple (80) permettant de transmettre un couple du moteur d'entraînement (32) vers le disque de brossage (22) est agencée au moins partiellement au niveau du second flanc (54).

8. Fraise à désherber les joints selon l'une quelconque des revendications précédentes, **caractérisée en ce que** le moteur d'entraînement (32) présente un arbre (34) avec un axe de rotation (35) qui est orienté transversalement, et en particulier perpendiculairement, par rapport à l'axe de rotation (50) du disque de brossage (22),
et en particulier **en ce que** l'axe de rotation (35) se situe sur le premier plan médian (64) ou présente par rapport au premier plan médian une distance correspondant à au maximum deux fois l'épaisseur (D) du disque de brossage (22).

9. Fraise à désherber les joints selon l'une quelconque des revendications précédentes, **caractérisée en ce que** l'unité moteur (12) présente un dispositif de transmission de couple (74) permettant de transmettre un couple du moteur d'entraînement (32) vers le disque de brossage (22),
et **en ce que** le dispositif de transmission de couple (74) comprend au moins un des points ci-dessous : un réducteur de vitesse (76) ; un mécanisme angulaire (78) permettant de rediriger un couple ; une section de transmission de couple (80) permettant de couvrir une distance spatiale.

10. Fraise à désherber les joints selon l'une quelconque des revendications précédentes, **caractérisée en ce qu'**un centre de gravité de l'unité moteur (12) se trouve sur le premier plan médian (64) ou présente par rapport au premier plan médian (64) une distance correspondant à au maximum deux fois l'épaisseur (D) du disque de brossage (22).

11. Fraise à désherber les joints selon l'une quelconque des revendications précédentes, **caractérisée en ce que** le flanc (54) est espacé par rapport au premier plan médian (64) grâce à au moins une sous-région.

12. Fraise à désherber les joints selon l'une quelconque des revendications précédentes, **caractérisée en ce qu'**un palier (48) au niveau duquel est monté le disque de brossage (22) est espacé par rapport au premier plan médian (64).

13. Fraise à désherber les joints selon l'une quelconque des revendications précédentes, **caractérisée en ce qu'**un capot de protection (88) pivotant ou rotatif est associé au disque de brossage (22), dans laquelle un axe de pivotement (96) est en particulier au moins approximativement parallèle ou coaxial par rapport à l'axe de rotation (50) du disque de brossage (22),
et en particulier **en ce que** le capot de protection (88) présente une position de pivotement (96) au sein de laquelle il recouvre le disque de brossage (22) associé et au sein de laquelle la fraise à désherber les joints peut être supportée avec le capot de protection (88) sur un support, dans laquelle ladite position de pivotement (96) est différente d'une position de pivotement opérationnelle pour une opération de fraisage.

14. Fraise à désherber les joints selon l'une quelconque des revendications précédentes, **caractérisée par** un dispositif de support (138) permettant de supporter la fraise à désherber les joints à distance du disque de brossage (22) au niveau d'un fond, comprenant au moins un des points ci-dessous :
le dispositif de support (138) est retenu au niveau de l'unité moteur (12) ;
- le dispositif de support (138) présente un ou plusieurs élément(s) de support (140) et en particulier un ou plusieurs galet(s) (140) ;
- le ou les élément (s) de support (140) sont agencés de manière symétrique par rapport au premier plan médian (64) ;
- le dispositif de support (138) est mobile et en particulier pivotant, avec un axe de pivotement (172) au moins approximativement parallèle à l'axe de rotation (50) du disque à brosse (22).

15. Fraise à désherber les joints selon l'une quelconque des revendications précédentes, **caractérisée par** au moins un des points ci-dessous :
- une longueur du dispositif formant barre de support (14) entre l'unité moteur (12) et l'ensemble formant poignée (16) est d'au moins 30 cm et de manière préférée d'au moins 50 cm ;
- une capacité de réglage d'une longueur de la fraise à désherber les joints entre une extrémité distale (18) et une extrémité proximale (20).

16. Fraise à désherber les joints selon l'une quelconque des revendications précédentes, **caractérisée par** au moins un des points ci-dessous :
- l'ensemble formant poignée (16) comprend une région de préhension (114) destinée à une préhension manuelle ;
- un autre élément de préhension (132), dans laquelle la fraise à désherber les joints peut être maintenue par une main placée au niveau de l'ensemble formant poignée (16) et par l'autre main placée au niveau de l'autre élément de préhension (132), et l'autre élément de préhension (132) présente une région de préhension (135) destinée à une poignée supérieure ou inférieure.
